Europäisches Patentamt

European Patent Office

Office européen des brevets

(11) Veröffentlichungsnummer: **0 042 571**
**A1**

(12) # EUROPÄISCHE PATENTANMELDUNG

(21) Anmeldenummer: 81104614.3

(22) Anmeldetag: 15.06.81

(51) Int. Cl.³: **H 05 H 1/22**
G 21 B 1/00, G 21 K 1/16
H 01 K 1/00, H 01 J 61/00
H 01 F 27/24, H 01 Q 3/44

(30) Priorität: 16.06.80 CH 4702/80
21.08.80 CH 6295/80

(43) Veröffentlichungstag der Anmeldung:
30.12.81 Patentblatt 81/52

(84) Benannte Vertragsstaaten:
AT BE DE FR GB IT NL SE

(71) Anmelder: Kyburz, Hans
Weidenstrasse 4
CH-4143 Dornach(CH)

(72) Erfinder: Kyburz, Hans
Weidenstrasse 4
CH-4143 Dornach(CH)

(74) Vertreter: Lins, Edgar, Dipl.-Phys. et al,
Patentanwälte Gramm + Lins Theodor-Heuss-Strasse 2
D-3300 Braunschweig(DE)

(54) **Verfahren zum Leiten und/oder Umwandeln von Energie in gasförmigen, flüssigen oder festen Medien.**

(57) Bei einem Verfahren zum Leiten und/oder Umwandeln von Energie in gasförmigen, flüssigen oder festen Medien wird zur Erhöhung des Wirkungsgrades vorgeschlagen, die Atome des Mediums auszurichten und deren Ausrichtung beim Leiten und/oder Umwandeln der Energie beizubehalten.

Eine Vorrichtung zur Durchführung des Verfahrens ist durch Magneten (16) gekennzeichnet, die in einem länglich erstreckten Bereich der Materie ein homogenes Magnetfeld erzeugen.

Vorgeschlagen werden insbesondere Stromleiter, Glühdrähte, Gasentladungslampen, Sende- und/oder Empfangsantennen und Transformerbleche, deren Atome gerichtet sind.

Fig 42

**BEZEICHNUNG GEÄNDERT.
siehe Titelseite**

Verfahren zum Leiten und/oder Umwandeln von Energie,
Vorrichtung zur Durchführung des Verfahrens und nach dem Verfahren
hergestellte Stromleiter, Glühdrähte, Gasentladungslampen, Sende-
und/oder Empfangsantennen und Transformerbleche

Die Erfindung betrifft ein Verfahren zum Leiten und/oder Umwandeln
von Energie in gasförmigen, flüssigen oder festen Medien.
Betroffen sind alle Arten der Leitung und Umwandlung von Energie,
insbesondere Stromleitung in festen und gasförmigen Medien,
Umwandlung von elektrischer Energie in Lichtenergie, Umwandlung
der Energie durch Kernfusion, Kernspaltung, Kernbeschuß und Kernanreicherung usw. .

Die bekannten Verfahren dieser Art weisen einen schlechten Wirkungsgrad und daher hohe Energieverluste auf. Kernfusion und
Kernspaltung bedürfen einer hohen Primärenergie.

Augabe der Erfindung ist es, die Energieverluste bei den bekannten
Verfahren zu vermindern und somit den Wirkungsgrad dieser Verfahren zu erhöhen.

Diese Aufgabe wird erfindungsgemäß bei einem Verfahren der eingangs erwähnten Art dadurch gelöst, daß die Atome des Mediums ausgerichtet werden und deren Ausrichtung beim Leiten und/oder
Umwandeln der Energie beibehalten wird.

Unter Ausrichtung der Atome wird deren Parallelstellen zueinander verstanden. Durch das erfindungsgemäße Verfahren kann
Energie kontrollierbar und mit wenig Verlust zugeführt, übertragen, geleitet und umgewandelt werden. Die Kernfusion, die
Kernspaltung, der Kernbeschuß und die Kernanreicherung können
mit viel weniger Energie ausgeführt werden. Die Verbindung
der K- und L-Magnetbahn wird kontrollierbar. Für die Laserleitung und für das Beschußmaterial können die Atome in die
optimale Lage gestellt werden.

Für die Fusion können die Atome kontrollierbar gerichtet
werden, wobei in der geeignetsten Lage die Kompression, die
Energiezufuhr und die Zündung ausgeführt werden können.

Durch gerichtete Atome kann der idealste Zusammenprallwinkel
bei zwei- oder mehrstrahligen Plasmaströmen oder bei einer
teilweisen Um- bzw. Ablenkung des Plasmastroms erfolgen.

Bei der Anwendung des erfindungsgemäßen Verfahrens auf festen
Medien, insbesondere auf Metallen, wird die Ausrichtung der
Atome vorzugsweise im flüssigen oder gasförmigen Zustand der
Metalle vorgenommen und beim Abkühlen der Metalle in den
festen Zustand beibehalten.

Das Verfahren läßt sich besonders gut zur Erzeugung von Licht
beim Durchfluß von elektrischem Strom durch das Medium anwenden, wenn die Atome in einem kurzen dünnen Bereich eines
komprimierten und ionisierten Gases gerichtet werden.

Wenn das Licht beim Durchfluß eines elektrischen Stroms durch einen Draht erzeugt wird, ist es vorteilhaft, wenn die Atome in einem kurzen dünnen Draht gerichtet werden. Vorzugsweise wird der Draht in einer Schutzkammer angeordnet.

Zur Durchführung einer Kernfusion können zwei Plasmaströme mit gerichteten Atomen zur Kollision gebracht werden.

Für die Veränderung von Materie durch Laserbeschuß ist es vorteilhaft, wenn die Atome des beschossenen Materials gerichtet sind.

Die Erfindung betrifft weiterhin eine Vorrichtung zur Durchführung des Verfahrens, wobei sich diese durch Magneten auszeichnet, die in einem länglich erstreckten Bereich der Materie ein homogenes Magnetfeld erzeugen.

Dabei kann eine gasförmige Materie in einem geraden länglichen Behälter angeordnet sein, wobei der Behälter von ringabschnittförmigen Elektromagneten umgeben ist, die ein homogenes Magnetfeld in Längsrichtung des Behälters erzeugen und wobei wenigstens zwei das Gas komprimierende Magnetspulen vorgesehen sind.

Alternativ kann eine ringförmige Anordnung eines Gasbehälters vorgesehen sein, an dessen Umfang ringabschnittförmige Elektromagneten angeordnet sind, in deren Mitte jeweils eine Spulenanordnung zur Kompression des Gases vorgesehen ist.

Die Erfindung betrifft weiterhin Stromleiter, Glühdrähte, Gasentladungslampen, Sende- und/oder Empfangsantennen und Transformerbleche, wobei diese dadurch gekennzeichnet sind, das sie nach dem erfindungsgemäßen Verfahren gerichtete Atome aufweisen.

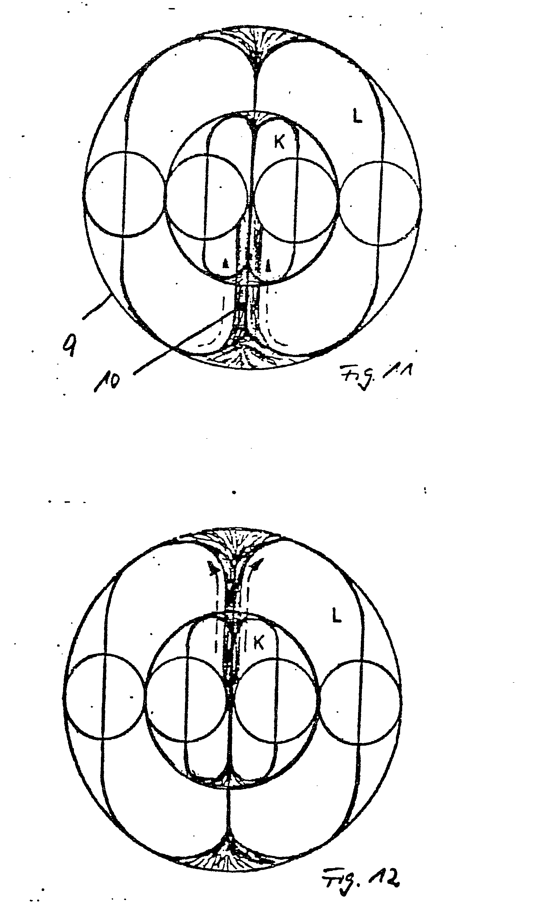

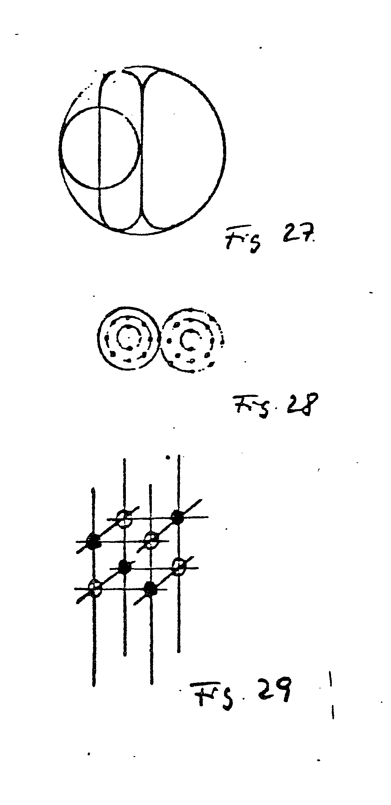

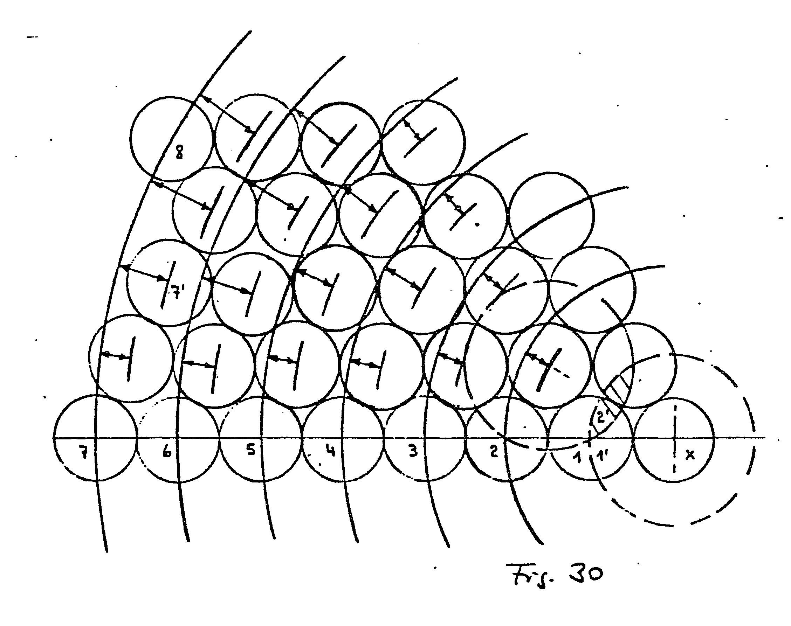

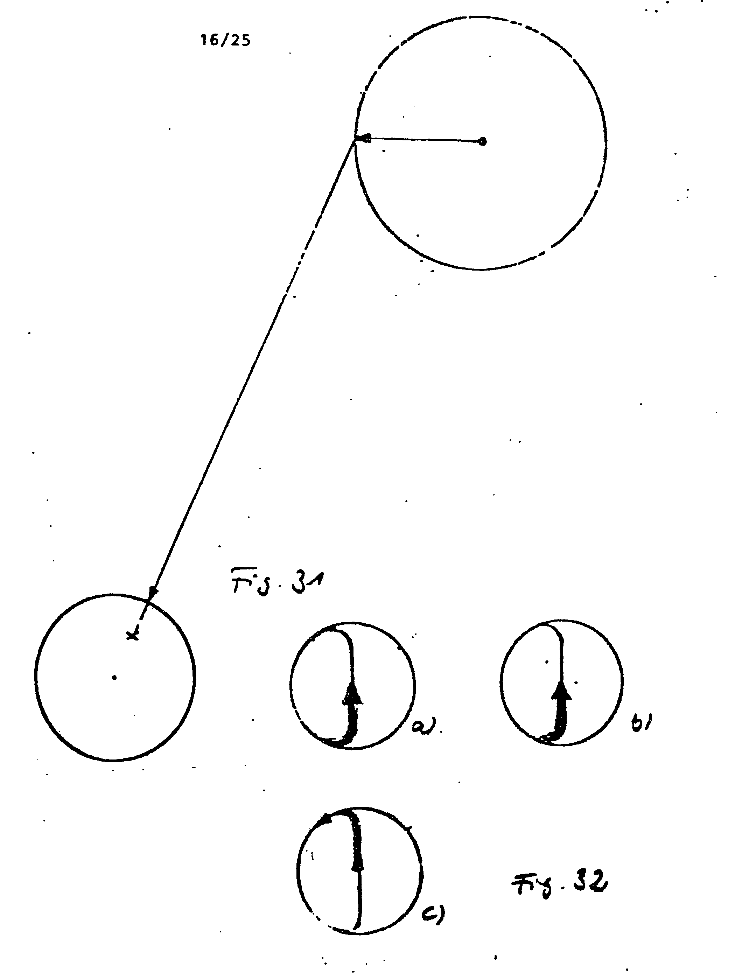

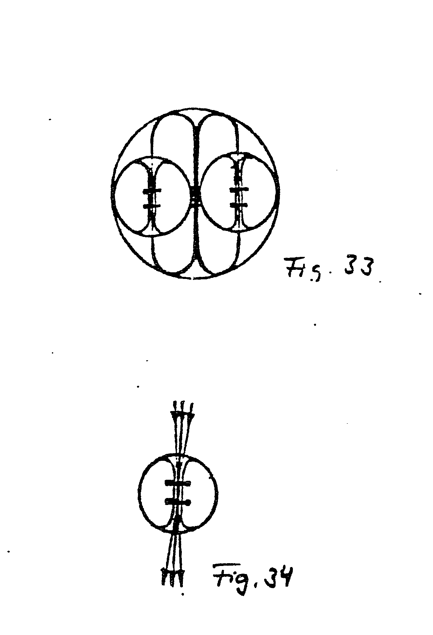

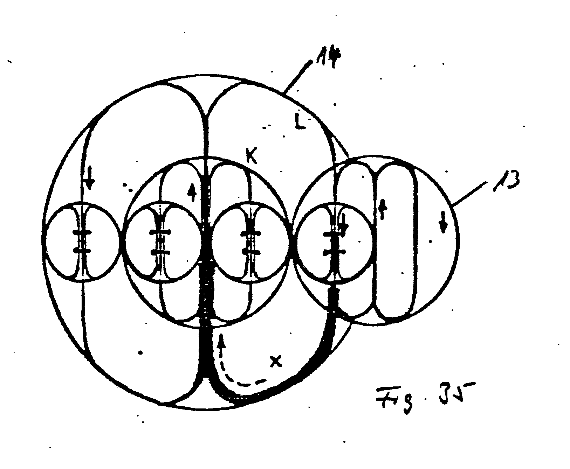

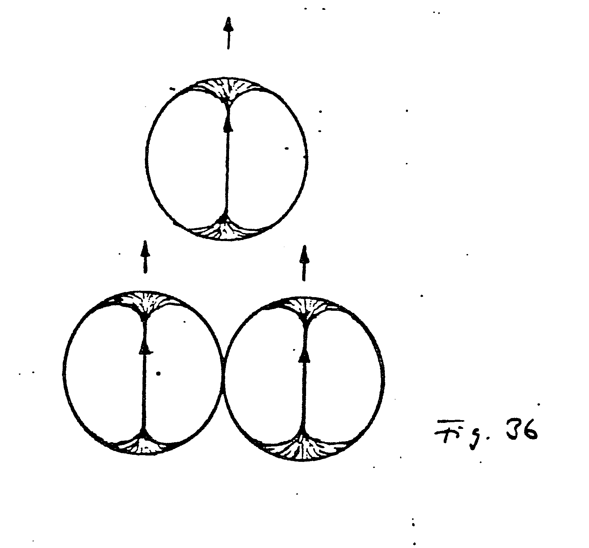

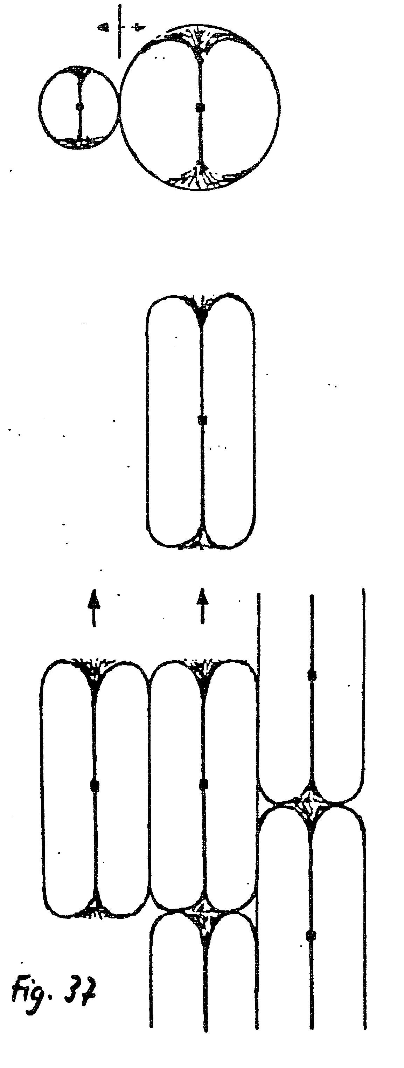

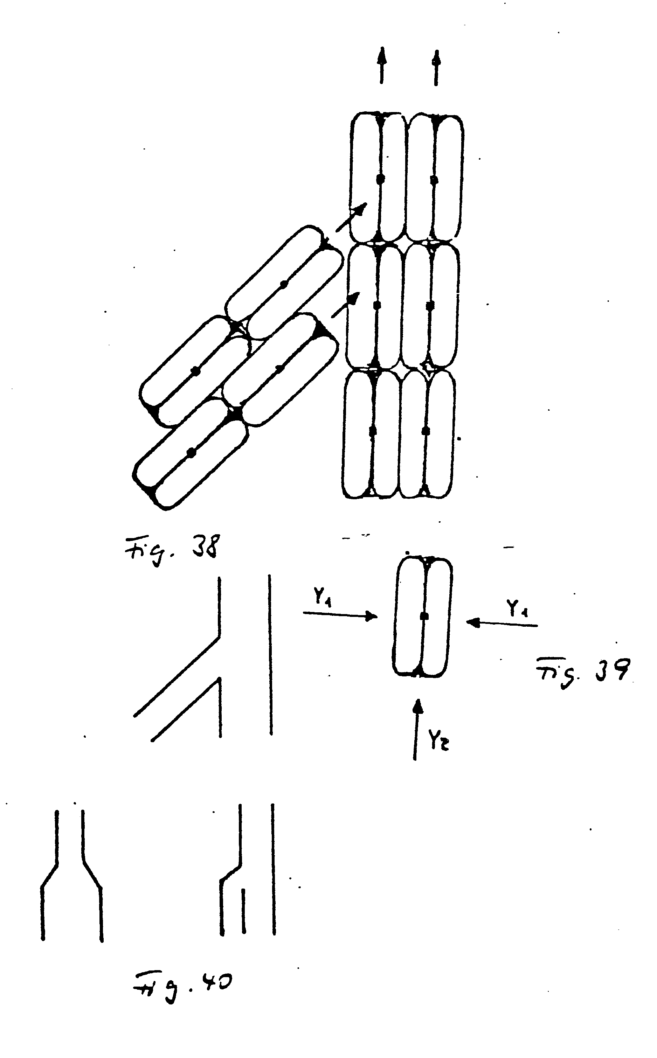

Die Erfindung soll im folgenden an Hand der Figuren 1 bis 48 näher erläutert werden.

Es zeigen:

Fig. 1  -  den Magnetbahnverlauf eines Atoms und des Elektrons

Fig. 2  -  einen Schnitt durch das Helium-Atom

Fig. 3  -  einen Schnitt durch die K- und L-Magnetbahn

Fig. 4  -  der Verlauf der Atom-Magnetbahn und der Elektron-Magnetbahn

Fig. 5  -  verdeutlich die Halterung des Elektrons

Fig. 6  -  zeigt einen Schnitt durch ein Atom

Fig. 7  -  verdeutlicht die Achsbildung

Fig. 8  -  zeigt die Magnetbahnen eines größeren Atoms

Fig. 9  -  einen Schnitt durch ein größeres Atom

Fig. 10 -  einen Grundriß eines größeren Atoms

Fig. 11 und
Fig. 12 -  verdeutlichen die Beziehung zwischen Magnetbahn und Proton

Fig. 13 und
Fig. 14 -  verdeutlichen die Wechselwirkungen zwischen Strom und Magnetismus im Atom

Fig. 15 - 17 verdeutlichen die Anregung zur Wechselwirkung

Fig. 18 - zeigt die Beeinflussung der Magnetbahn durch Wärme

Fig. 19 - erläutert den Begriff der Temperatur als Strahlungszustand des Protons

Fig. 20 - verdeutlicht die Wärmeübertragung

Fig. 21 - verdeutlicht die Wärmeausdehnung

Fig. 22 - Atom-Magnetbahnkräfte und Elektron-Magnetbahnkräfte

Fig. 23 - Kraftfelder der Achsmagnetbahnen

Fig. 24 - Kraftfelder der Schalenmagnetbahnen

Fig. 25 - Kräfte zwischen den Magnetbahnen

Fig. 26 - Anziehungsbereich und Orientierungsbereich des Atoms

Fig. 27 - 29 verdeutlichen die Kristallbildung

Fig. 30 - zeigt ein Modell der Gravitation

Fig. 31 - ein Modell der Wärmeübertragung von der Sonne zur Erde

Fig. 32 - verdeutlicht Einstrahlung und Abstrahlung von Wärme

Fig. 33  -  verdeutlicht den Charakter des Protonenlichts

Fig. 34  -  verdeutlicht den Charakter von Elektronenlicht

Fig. 35  -  ein Modell der Verbrennung

Fig. 36  -  die Verbindung mit der K-Magnetbahn

Fig. 37  -  schematisch die Fusion durch Annäherung

Fig. 38  -  schematisch die Fusion durch Einschuß

Fig. 39  -  Einschußrichtungen

Fig. 40  -  schematische Einschußmöglichkeiten

Fig. 41  -  schematisch den Beschuß von Atomen mit Laser

Fig. 42  -  eine Vorrichtung zum Richten der Atome in einem
             länglichen Gasbehälter

Fig. 43  -  eine Vorrichtung zum Richten der Atome in einem
             ringförmigen Gasbehälter

Fig. 44  -  eine schematische Darstellung von Metallatomen

Fig. 45  -  eine schematische Darstellung der Richtung von
             Metallatomen

Fig. 46  -  eine schematische Darstellung eines herkömmlichen
             Glühdrahts

Fig. 47  -  einen Metalldraht mit gerichteten Atomen in einer Schutzkammer

Fig. 48  -  eine Gaskammer zur Erzeugung von Protonenlicht

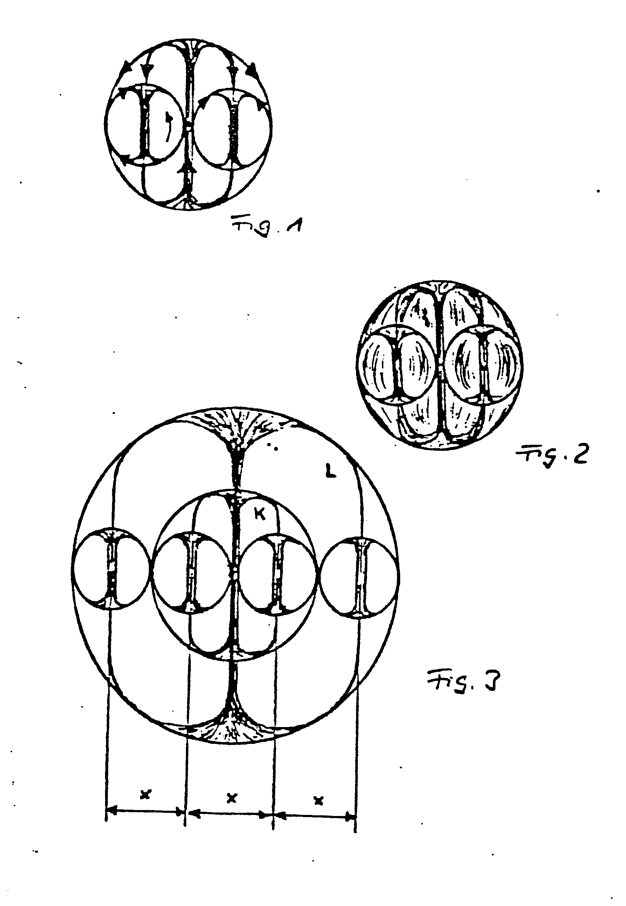

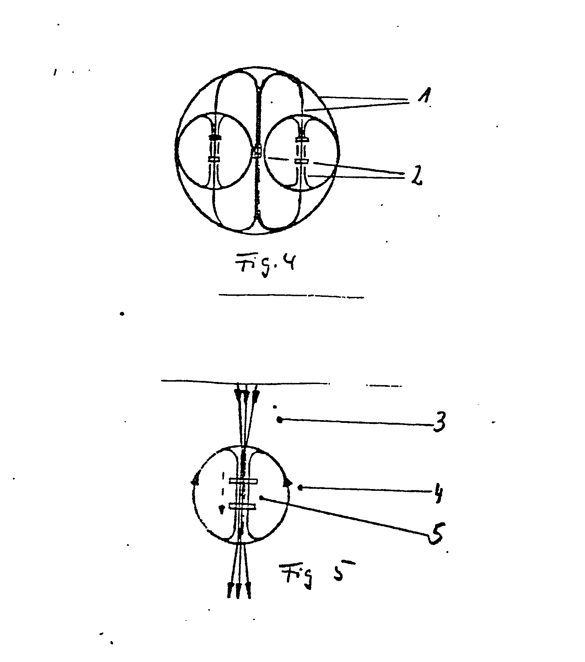

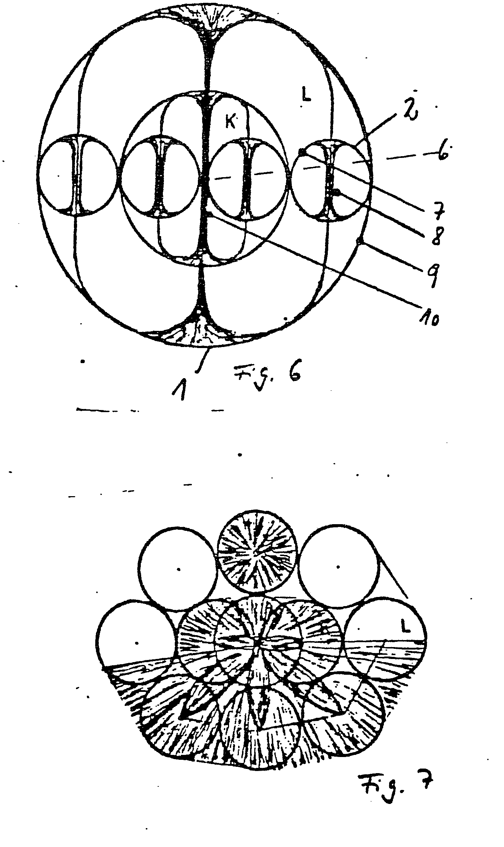

Die Fig. 1 bis 3 verdeutlichen, daß der Atomkern von einer oder mehreren Magnetbahnen umhüllt ist. Der Abstand der Bahnen besteht zwei Elektronen-Durchmesser x. Die Elektronen haben einen Kern mit nur einer Magnetbahn und sind alle gleich groß. Jedes Elektron hat Kontakt mit dem Kern (direkt oder indirekt) und mit dem Nachbar-Elektron.

Der Kontakt mit dem Kern entsteht durch die enorm starke Anziehung auf den Kern (Verhältnis zur Masse) und durch die gemeinsame Achse der Magnetbahnen in der Mitte des Atoms in Folge des kürzesten Abstands zum Kern.

Bei der Bindung mit einem anderen Atom placiert sich ein Elektron oder ein Atomkern auf dem offenstehenden Platz der Magnetbahn. Dabei bündeln sich die Kraftlinien zur Achse des Elektrons oder Atomkernes.

Die Achsmagnetbahn K steht im Abstand eines Elektronendurchmessers um den Kern, jede nachfolgende Achsmagnetbahn im Abstand von zwei Elektronendurchmessern.

Es bestehen zwei elektrische Momente

a)    im Proton als aktive und funktionelle Elektrizitätswolke
      im Kern. Durch die Aktivierung des Protons, in Folge
      elektrischer oder magnetischer Auslösung, entsteht ein
      Strom, welcher die Magnetbahnen verlagert. Das Proton
      selbst stahlt in der entsprechenden Frequenz.

b)    im Elektron als aktiver Elektrizitätsaufnehmer oder
      Elektrizitätsträger.

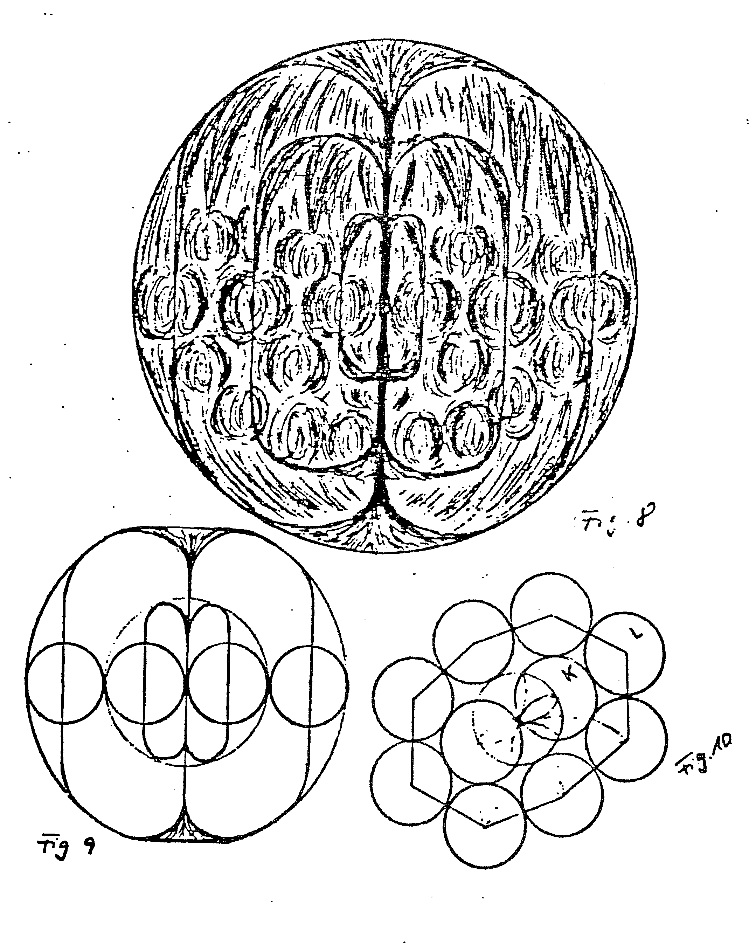

Dadurch ergeben sich zwei magnetisch umschlossene Räume (Fig. 4)
mit der Atommagnetbahn 1 mit der Schalenmagnetbahn und der Achsmagnetbahn und der Elektronmagnetbahn 2 mit der Schalenmagnetbahn und der Achsmagnetbahn.

Die Schalenmagnetbahn 3 des Atoms bildet sich im Bereich des
Elektrons zur gemeinsamen Achse des Elektrons. Die Schalenmagnetbahn 4 des Elektrons umschließt im Elektron zwei verstellbare Potentialwolken 5. Bei der Elektrizitätsaufnahme
nimmt der Abstand zwischen den Potentialwolken 5 zu und bei der
Elektrizitätsabgabe wird der Abstand kleiner.

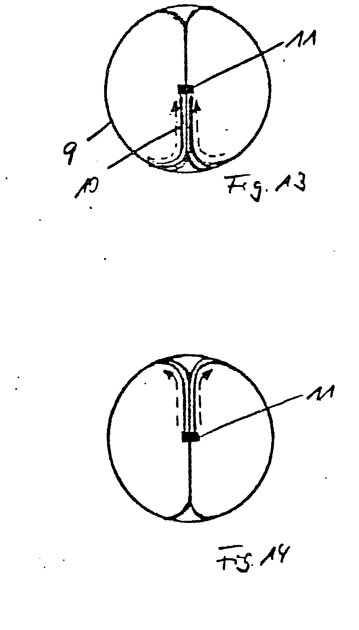

Der Atomkern ist von einer oder mehreren Magnetbahnen umschlossen
(Fig. 6). Der größte Abstand der Bahnen ist der Durchmesser von
zwei Elektronen. Durch die gemeinsamen Achsen hat jedes Elektron
Kontakt mit dem Kern. Fig. 6 verdeutlicht im Zentrum einen Kern
6 mit Protonen und Neutronen.

Die Magnetbahn 2 des Elektrons lassen sich aufteilen in eine
Schalenmagnetbahn 7 und eine Achsmagnetbahn 8. In entsprechender

Weise läßt sich die Atommagnetbahn 1 in eine Schalenmagnetbahn 9 und eine Achsmagnetbahn 10 unterteilen.

Jedes Atom hat ein durch die Anzahl der Protonen bestimmtes Magnetfeld. Das magnetische Feld hat deshalb auf jeder Bahn seine Konstante und kann nur durch Verlagerung von der Schalenmagnetbahn zur Achsmagnetbahn verändert werden oder entgegengesetzt von der Achsmagnetbahn zur Schalenmagnetbahn.

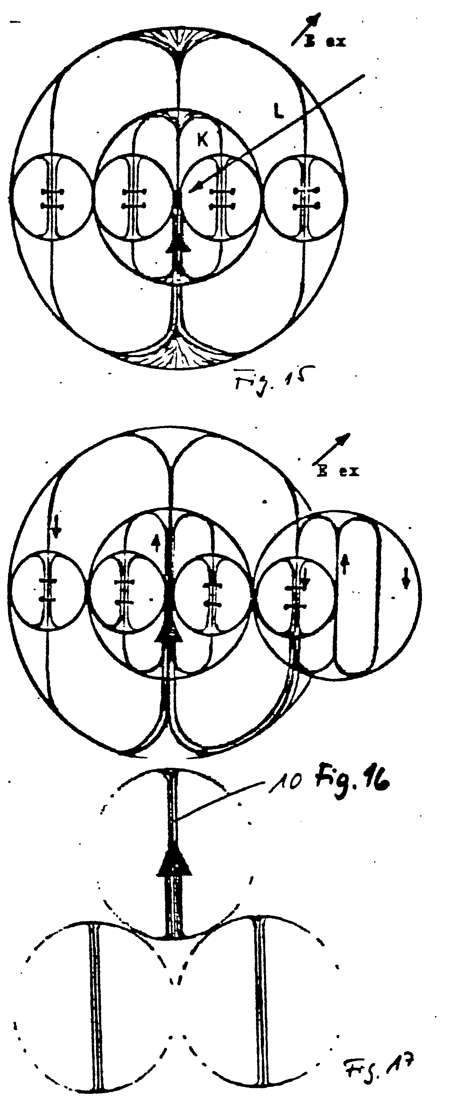

Fig. 7 zeigt den Verlauf der Magnetbahnen von oben mit den Bündelungen der Schalenmagnetbahnen zu den Achsen für die Elektronen.

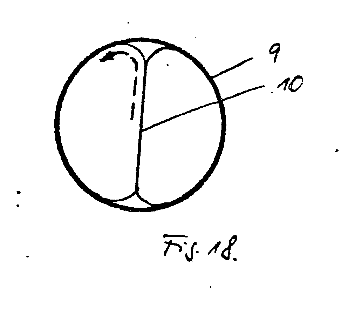

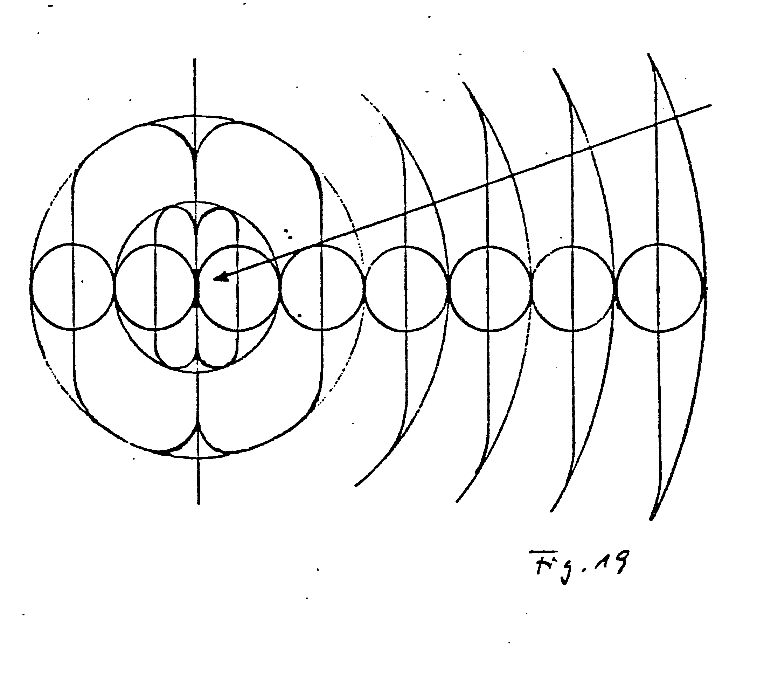

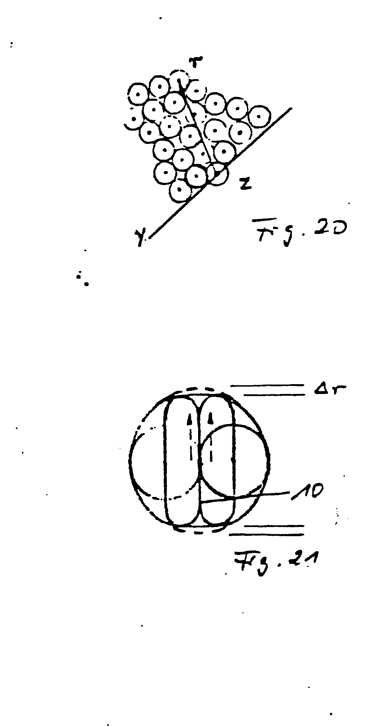

In Folge der Anordnung der Elektronen ist der atomare Aufbau der Magnetbahnen des Atoms (Fig. 8 - 10) nicht rund.

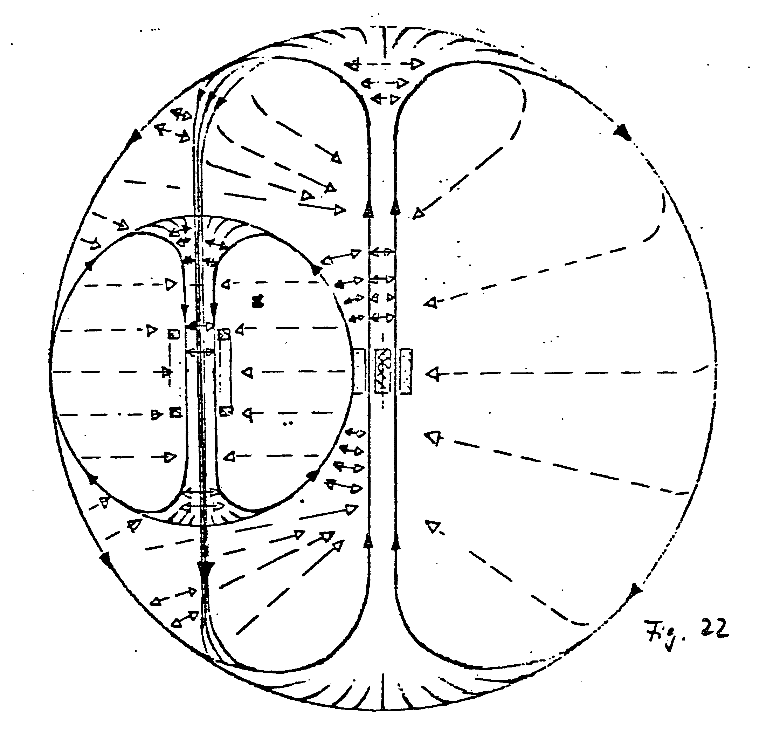

Fig. 11 und 12 verdeutlichen die Beziehungen zwischen Magnetbahn und Proton. Durch die Aktivierung des Protons wird die Achsmagnetbahn 10 verstärkt und die Schalenmagnetbahn 9 geschwächt. Durch die Aktivierung des Protons entsteht zugleich eine starke Protonenstrahlung, die als Wärme empfungen wird. Unter diesem Einfluß ist das Atom in einem neuen, veränderten, d. h. wärmeren Zustand. Es strahlt stärker als seine Nachbaratome. Das Atom wird zur einer Strahlenquelle für die Umgebung. Es besteht eine dauernde Wechselwirkung zwischen der Änderung des Protons und einer zwangsläufigen Änderung der Magnetbahn. Die Aktivierung des Protons kann umgekehrt ebenfalls durch die Magnetbahnen erfolgen.

Bei Sonneneinstrahlungen fühlen wir nicht den Sonnenstrahl sondern unsere eigenen veränderten Atome, welche strahlen.

Die Atome in der Hautoberfläche werden bis zur Sonnen-Einstrahlungstiefe aktiviert. Unsere eigenen Atome strahlen an der
Hautoberfläche stärker als die tiefer liegenden, d. h. von der
Sonne nicht aktivierten, Atome. Die Differenz zwischen den
aktivierten und den nichtaktivierten Atomen fühlen wir als
Wärme.

Fig. 12 verdeutlicht die Abkühlung eines Atoms, bei die Schalenmagnetbahn 9 stärker wird, d. h. die Feldstärke zunimmt.

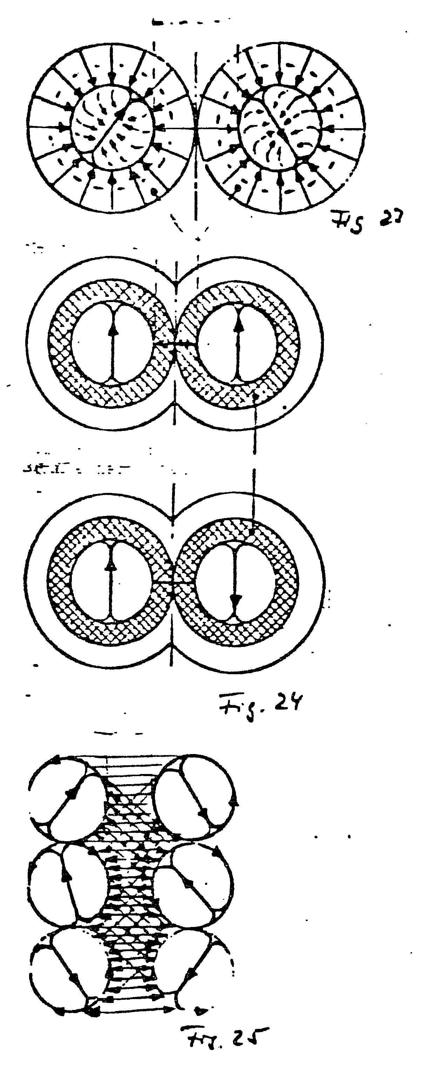

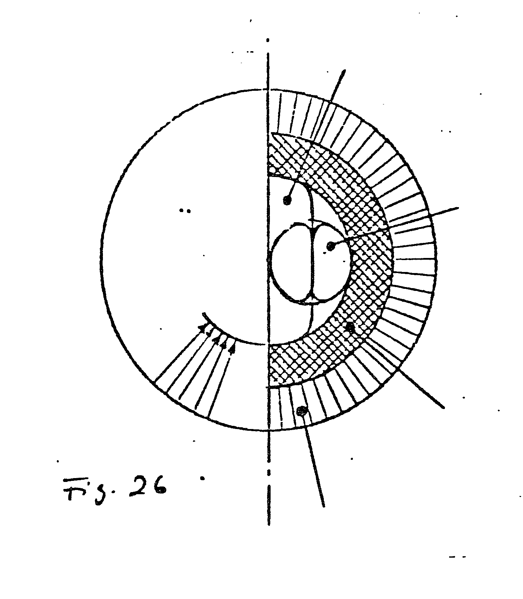

Durch die Wechselwirkung zwischen Strom und Magnetismus im
Atom (Fig. 13 und 14) wird ein Feld aufgebaut und das andere
abgebaut. Wenn die Achsmagnetbahn 10 stärker wird, wird zugleich
die Schalenmagnetbahn 9 schwächer. Durch die Änderung der
Magnetbahn entsteht ein stark elektrischer Stromfluß im Proton.
Das Proton beginnt stärker zu strahlen als seine Nachbaratome,
es ist fähig Strahlungsenergie, d. h. Wärme abzugeben. Das
Atom ist wärmer.

Bei der Wärmeabgabe (Fig. 14) gibt das Proton 11 Strahlungsenergie an das Nachbaratom ab. Durch die Strahlungsenergie-
Abgabe wird die Achsmagnetbahn 10 schwächer und die Schalenmagnetbahn 9 stärker. Der Strom im Proton wird schwächer, das
Atom ist kälter.

Die Figuren 27 bis 29 verdeutlichen die Kristallbildung. Die Gestalt des Kristalls wird grundlegend gebildet durch die Elektronenbesetzung der Atome (Figur 27) (ungleiche Elektronenbesetzung), durch die molekulare Konfiguration (Figur 28) und durch die sich im Orientierungsraum zusammenfindenden Flächen während der Erstarrungsphase (Figur 29).

Bei der Erstarrung, d.h. bei der Verlagerung der Achsmagnetbahn zur Schalenmagnetbahn des Atoms, bestimmen diese Faktoren die Form und Art des Kristalls. Die gewaltigen Kräfte werden dirigiert von den Magnetbahnflächen.

Die Struktur des einzelnen Atoms bildet auch für die Gravitation die Grundlage.

Die Schalenmagnetbahnen des Atoms verlaufen in entgegengesetzter Richtung wie die Achsmagnetbahn. Deshalb ziehen sich die beiden Bahnen an. Die Achsmagnetbahn ist jedoch viel stärker, wodurch die Anziehungskraft außerhalb des Atoms bis zum doppelten Atomdurchmesser wirksam ist.

Die Anziehungskraft ist somit bis in die Mitte des Nachbaratoms 1' wirksam. Diese Kraft wirkt zwischen dem zentralen Atom x und jedem Atom in der ersten Schicht 1.

Zwischen der ersten und zweiten Atomschicht entsteht infolge der Möglichkeit einer näheren Placier-ung einzelner Atome ein Überlagerungsfeld 2'. Zwischen der 6. und 7. Atomschicht ist die Überlagerung bereits größer als ein Atomdurchmesser 7'.

Diese Überlagerungsfelder bewirken die Gravitation. Bei größer werdenden Körpern placieren sich die dazukommenden Atome wie neue Schichten um das zentrale Atom. Dieses Atom versucht möglichst nahe an das Zentrum heranzukommen. Kann sich ein Körper

- 13 -

selber bilden, d.h. ohne Krafteinwirkung von außen, so wird er
rund.

Jede weitere Schicht um ein zentrales Atom vergrößert die Gravitation. Bei unseren Planeten haben die Atome an der Erdoberfläche
die meßbare Anziehungskraft gegen das Zentrum.

Jeder Körper hat seine eigene Gravitation, die bestimmt wird
durch seine Größe und durch seinen elementaren Aufbau.

Da die beiden Faktoren die Gravitationskraft beeinflussen, besteht zwischen Körpern unterschiedlicher Größe und zwischen Körpern unterschiedlicher Materialien (Aggregatzustände) eine Gravi-
tations-Übertragungs-Differenz.

Die Kraft wird in festen, flüssigen oder gasförmigen Materialien
nicht gleich. Durch diese Differenz entsteht eine Oberflächenspannung.

Die Gravitationstemperatur ist ein durch den Druck bedingter
Strahlungszustand des Atoms, der nicht weitergeleitet wird.

Stellt man sich die Atome perlschnurartig von der Erdoberfläche
bis in das Erdzentrum vor, so steigt der Druck und entsprechend
die Temperatur, d.h. der Strahlungszustand.

Im Zentrum eines großen Körpers, z.B. unseres Planeten, wird der
Zentrumsdruck und entsprechend die Temperatur so hoch, daß
200.000° C erreicht werden.

Bei der Sonne wird der Zentraldruck so stark, daß die Fusionstemperatur überschritten wird. Diese zusätzlich frei werdende
Wärme übersteigt die Gravitationswärme, d.h. die Druckstrahlung
der Atome, und wird bis an die Oberfläche der Sonne weitergeleitet und als Spontanwärme abgestrahlt (Figur 31).

Der Fusionsablauf reguliert sich selbständig entsprechend dem
Zentrumsdruck zum gleichmäßigen Fusionsablauf. Wird zuviel Wärme
erzeugt, das heißt mehr als abgeführt werden kann, so wird durch
eine Explosion der Zentrumsdruck geschwächt.

In der Sonnenmitte wird also durch magnetische Auslösung (Atomkernfusion) Wärme erzeugt (Figur 32b). Die Wärme wird von Atom
zu Atom bis zur Sonnenoberfläche als Spontanwärme übertragen
(elektrische Auslösung)(Figur 32a). Durch Abstrahlung an der
Sonnenoberfläche wird das Atom kälter (Figur 32c).

Licht

Das Licht hat nur Wellencharakter. Ein Unterschied besteht jedoch
bei der Lichtquelle, ob das Licht vom Proton oder von der Entladung des Elektrons stammt.

Das Protonenlicht (Figur 33) entsteht bei der Wärmestrahlung
durch elektrische Auslösung, d.h. durch direkte Beeinflussung
des Protons durch Anstrahlung oder durch magnetische Auslösung,
d.h. Beeinflussung der Magnetbahn durch Magnetbahnverbindungen.

Durch die starke Strahlungsempfänglichkeit des Protons oder
durch die Verlagerung der Schalenmagnetbahn zur Achsmagnetbahn
entsteht ein starker elektrischer Strom, wodurch das Proton
strahlt. Die Lichtstrahlung hat jedoch eine höhere Frequenz als
die Wärmestrahlung.

Das Elektron (Figur 34) wird gehalten durch eine gemeinsame
Achse (d.h. durch gebündelte Schalenmagnetbahn des Atoms und
der Achsmagnetbahn des Elektrons).

Durch Verschieben der beiden Elektronenwolken kann das Elektron
mehr oder weniger Elektrizität speichern. Wird jedoch die Achsmagnetbahn, die - wie beschrieben - vom Elektron und vom Atom
gemeinsam gebildet wird, verändert, so werden auch die beiden
Elektronenwolken verschoben und senden dadurch Licht aus.

Die Anregung zur Lichtaussendung kann somit einseitig durch die
Magnetfeldveränderung des Atoms oder des Elektrons herbeigeführt
werden. Zur Elektronen-Entladung ist eine bestimmte Energiemenge
nötig.

So wie jedes Atom seinen Anziehungs- und seinen Orientierungsbereich hat, so hat jedes Elektron und alle weiteren Atomkernbauteile den Raumbereich der Anziehung und der Orientierung, infolge des gleichen Aufbaus.

Wird ein Elektron oder ein Kernbauteil sehr stark geschwächt, indem seine Schalenmagnetbahn sich zur Achsmagnetbahn verlagert,
so wird seine Anziehungskraft verstärkt. Die schwächere Schalenmagnetbahn bewirkt jedoch, daß entsprechend auch der Orientierungsbereich reduziert oder gänzlich gelähmt wird. Der stärkere normale Nachbar kann den geschwächten, nicht mehr zur Orientierung
fähigen Körper absorbieren. Durch die Überladung, d.h. durch die
plötzlich verstärkte, veränderte Magnetbahn, entsteht ein starker Strom und der vereinigte Körper strahlt ab oder zerstrahlt.

Ein Atom ist im Aufbau gleich wie ein Elektron oder die vielen
verschiedenen Atomkernbauteile. Es besteht jedoch ein Unterschied
durch den vorgeschriebenen, funktionstüchtigen Atomkernbau.
Trotz der starken Schwächung der Schalenmagnetbahn bleibt ein
Atom funktionstüchtig. Aus diesem Grund gibt es keine Antimaterie
beim Atom.

Bei aktivierbaren Körpern, z.B. Elektronen, Protonen, Neutronen (Daryonen) Quarks, können durch Schwächung Absorptionen hergestellt werden. Aktivierbare und funktionelle Körper, wie das Atom, sind nicht auflösbar. Die Verbindung von Wasserstoff und Sauerstoff zu $H_2O$ ist in Figur 35 dargestellt. Die Reaktionstemperatur beträgt 1.000 ° C. Diese Temperatur ist erforderlich für die Einplacierung des Wasserstoffatoms 13 in das Sauerstoffatom 14. Durch die höhere Temperatur ist die Schalenmagnetbahn des Sauerstoffatoms geschwächt und die Achsmagnetbahn verstärkt. Die schwächere Schalenmagnetbahn ermöglicht das Einplacieren des Wasserstoffatoms. Die stärkere Achsmagnetbahn zieht das Wasserstoffatom an. Durch die Verbindung wird Magnetbahnenergie des Atoms frei, es entsteht eine exotherme Reaktion. Diese Verbindung ist wegen der Magnetbahnhöhe (Länge) des Atoms erst ab der L-Magnetbahn möglich, sowie auf allen weiteren Bahnen M, N, O, P.

Auf der L-Magnetbahn ist diese Verbindung eine stark exotherme Reaktion, da die L-Magnetbahn energiereicher ist als die M, N, O, P-Bahnen. Durch die plötzlich freiwerdende, auf die zentrale Magnetachse anstehende magnetische Feldstärke entsteht ein starker elektrischer Strom. Das Proton wird dadurch aktiviert und strahlt ab an seine kälteren Nachbarn.

Die Verbindung mit der K-Magnetbahn erfordert eine höhere Energie. Die Reaktionstemperatur beträgt, je nach Kompression, 20 Millionen bis 100 Millionen ° C. Eine Fusion ist nur bei gleichgerichteten Atomen möglich. Durch die Kopplung der Protonenringe wird die K-Magnetbahnenergie des einen Atoms frei. Die exotherme Reaktion ist sehr groß, da die Magnetbahnenergie eines Atoms frei wird. Für eine wirtschaftliche Nutzung der Fusionsenergie müssen alle Atome gerichtet sein. Die Zündtemperatur ist erforderlich, um die K-Magnetbahn zu schwächen. Nur bei gleichgerichteten und genügend angenäherten Bahnen kann der Protonenring überspringen.

Beim Koppeln der Protonenringe wird die Achsmagnetbahn plötzlich um das Doppelte verstärkt. Dadurch entsteht ein stark elektrischer Strom im Ab und An. Das Proton wird aktiviert und strahlt ab an seine kälteren Nachbaratome.

Fusion durch Annäherung (Figur 37)

Fusion bedeutet Kopplung der Protonenringe. Bei der kritischen Temperatur löst sich das Elektron von der Schalenmagnetbahn des Atoms. Der vierte Aggregatzustand, das Plasma, ist dadurch erreicht. Durch die enorme Erwärmung wird die Schalenmagnetbahn des Atoms so stark zur Achsmagnetbahn verlagert, daß das Elektron nicht mehr gehalten werden kann. Die gemeinsame Achse kann nicht mehr aufrechterhalten werden. Bei steigender Temperatur wird die Schalenmagnetbahn des Atoms immer schwächer und die Achsmagnetbahn immer energiereicher. Die Bahn wird in axialer Richtung größer geschleudert. Die Innenbahn wird dadurch sehr stark. Die Atome können deshalb näher aneinander gepreßt werden. Für die Fusion ist jedoch diese stärker werdende Achsmagnetbahn nachteilig. Dem Protonenring wird das Überspringen auf die immer stärker werdende Innenbahn erschwert. Die Fusion durch Annäherung benötigt deshalb einen hohen Plasmadruck, um diese Magnetbahnkräfte zu überwinden.

Fusion durch Einschuß (Figur 38)

Die Fusion durch Einschuß hat den Vorteil gegenüber der Fusion durch Annäherung, daß weniger Primärenergie benötigt wird.

Die Fusion wird herbeigeführt durch zwei oder mehrere Plasmastrahlen, die in einem bestimmten Winkel ineinander bzw. aufeinander treffen. Das Aufeinandertreffen kann auch durch teilweise Um- oder Ablenken eines Teil-Plasmastroms erfolgen oder durch Fokussierung eines Plasmastromes (Figur 40). Der geeigneteste Einschußwinkel liegt zwischen den beiden ungünstigsten Richtungen Y1 und Y2 (Figur 39). Durch den Zusammenschuß, d.h. den Aufprall wird der nötige Plasmadruck erzeugt. Der einschießende, umgelenkte oder fokussierende Strahl muß stärker sein als der beschossene Strahl, um die Achsmagnetbahnkräfte zu überwinden. Die Atome müssen bei beiden Plasmaströmen erfindungsgemäß gerichtet sein.

Beschuß von Atomen mit Laser (Figur 41)

Für die Atom-Kernbeschießung müssen die Atome gerichtet sein. Dies ist erforderlich in allen Aggregatzuständen. Für die Anfertigung von gefrorerem Beschußmaterial müssen die Atome während des Einfrierens gerichtet gehalten werden.

Durch die gerichteten Atome kann das Beschußmaterial überprüfbar von allen Seiten, d.h. von der geeignetesten Seite beschossen werden.

Die Figuren 42 und 43 zeig-en Vorrichtungen zum Richten der Atome. In Figur 42ist ein länglicher Gasbehälter 15 dargestellt, der von zwei ringabschnittförmigen Elektromagneten 16 um-geben ist. Diese erzeugen über eine Strecke des länglichen Gasbehälters 15 ein homogenes Magnetfeld, das in gestrichelten Linien angedeutet ist. Die beiden ringabschnittförmigen Elektromagneten 16 werden durch zwei Magnetspulen 17 zur Kompression des Gases begrenzt. Eine weitere Magnetspule 17 befindet sich im Zentrum der ringabschnittförmigen Elektromagneten 16.

Figur 43 zeigt eine entsprechende Anordnung mit einem ringförmigen Gasbehälter 18. Dieser ist am Umfang von aneinander angrenzenden ringabschnittförmigen Elektromagneten 19 umgeben. In deren

Mitte befindet sich jeweils eine Magnetspule 20 zur Kompression des Gases.

In beiden dargestellten Ausführungsformen kann eine Fusion durch Annäherung oder durch Beschuß erfolgen.

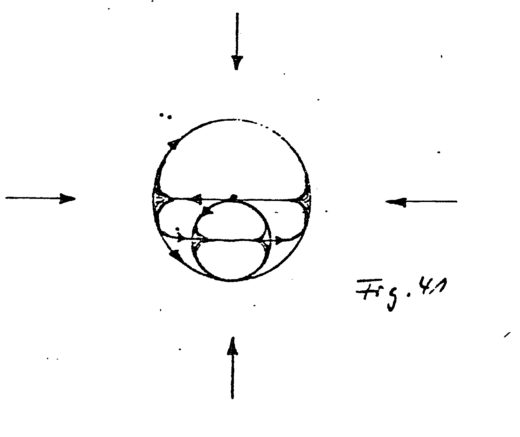

Figur 44 zeigt schematisch die Ausrichtung von Metallatomen bei einem normalen Guß (a) und bei einem erfindungsgemäßen Guß (b) b bei dem die Atome gerichtet sind. Das Richten findet während des Gießprozesses, d.h. während des Überganges von der flüssigen in die feste Phase statt. Metall-Legierungen müssen so gewählt werden, daß der Curie. bei der Erstarrungstemperatur liegt.

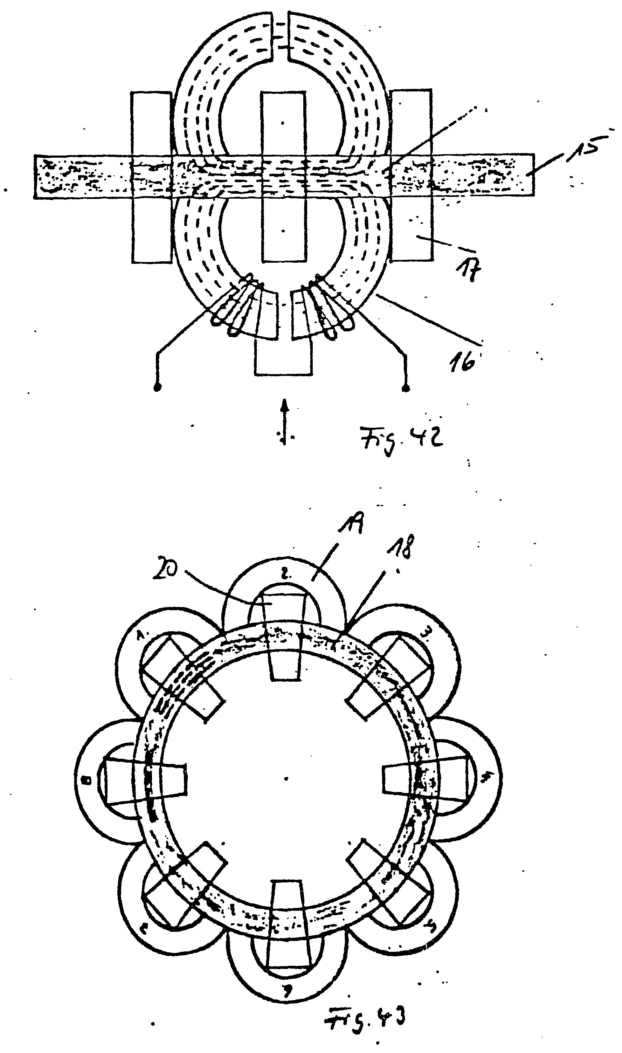

Figur 45 zeigt schematisch den Ablauf der Richtung der Metallatome.

Gerichtete Metallatome bringen im elektrotechnischen Bereich enorm große Vorteile, da keine Verluste durch Wirbelströme entstehen. Bei gerichteten Metallatomen wird eine große elektrische Leitfähigkeit wie beim Supraleiter erreicht. Die Lage der Atome und Elektronen sind für den Stromtransport in der günstigsten Richtung. Der Vorteil gegenüber dem Supraleiter ist, daß nicht gekühlt werden muß.

Das Richten von Kristallen ist in der Technik bereits bekannt und wird mit GOSSBAND-Blech bei den Transformern genutzt. Dabei spielt die Lage der Kristallite zur Walzrichtung die entscheidende Rolle. Mit GOSSBAND werden die guten magnetischen Eigenschaften der kristallographischen Achsen genutzt. Das Band wird durch kombinierte Walz- und Glühprozesse mit anschließender Rekristallisationsglühung vorbehandelt, daß die Kristallachse genau in der Walzrichtung liegt. Bei GOSSBAND wird somit nur der magnetische Fluß der Würfelkanten der Kristalle genutzt. Im

- 20 -

Kristall selbst liegen die Atome willkürlich nebeneinander.
Durch das Richten aller Atome entsteht ein wesentlich größerer
Nutzungs- bzw. Wirkungsgrad gegenüber gerichteten Kristallkanten.

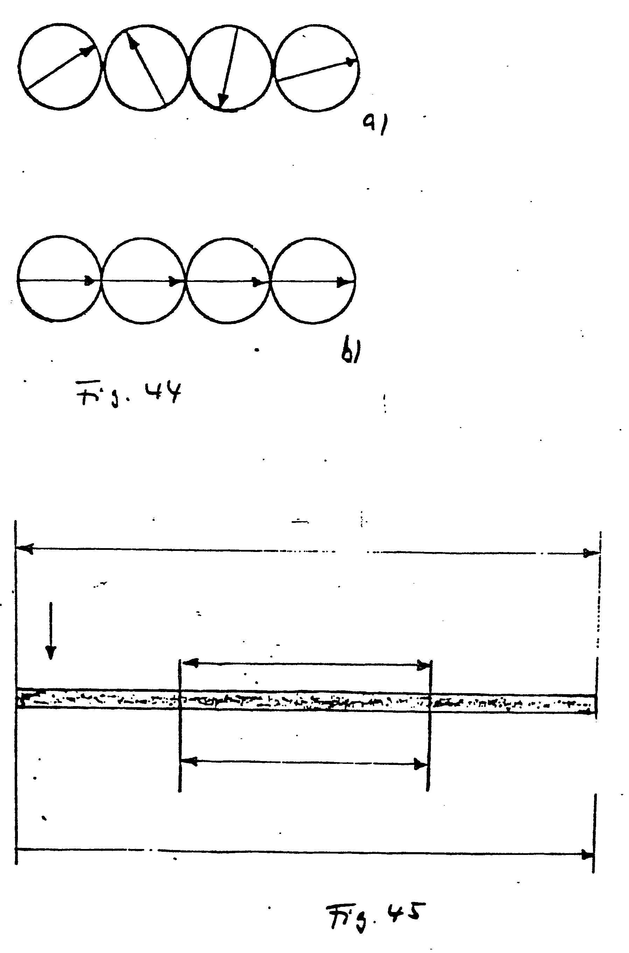

Figur 46 zeigt schematisch den Vorgang bei der Lichterzeugung
mit Glühdraht 21. Das innere des Metalldrahtes 21 bleibt ungenutzt. Nur die Atome der Drahtoberfläche können Licht abstrahlen.
Der Metalldraht einer Glühbirne wird erhitzt, wodurch nur ein
Anteil von 3 bis 8 % der Protone auf die Frequenz des Lichtes gebracht werden kann. Der größte Teil, nämlich 92 bis 97 %, bleibt
dauernd im Frequenzbereich der Wärmestrahlung und dadurch für
die Lichtabstrahlung ungenutzt.

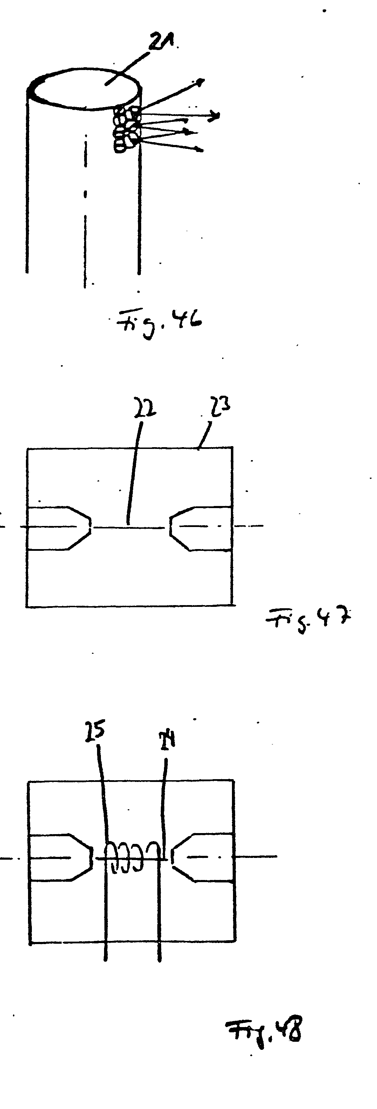

Durch gerichtete Metallatome oder Moleküle können die Protone
schnell und unbeeinflußt durch die Nachbaratome auf die Lichtfrequenz gebracht werden. Für eine gleiche Leistung ist nur ein
dünner, kurzer Draht 22 erforderlich, wie er in Figur 47 schematisch angedeutet ist. Dieser befindet sich vorzugsweise in einer
Schutzkammer 23.

Zur Erzeugung von Protonenlicht oder Elektronen-Entladungslicht
mittels Gasen werden die Atome in einem kurzen, dünnen Bereich
24 (Figur 48) eines komprimierten und ionisierten Gases auf die
Frequenz des Lichtes gebracht. Durch das Richten der Atome mittels Spulen 25 wird zusätzlich erreicht, daß alle zur Erzeugung
von Licht eingesetzten Atome in der geeignetesten Lage benutzt
werden.

0042571

Patentansprüche

1. Verfahren zum Leiten und/oder Umwandeln von Energie in gasförmigen, flüssigen oder festen Medien,

   d a d u r c h   g e k e n n z e i c h n e t ,   d a ß   die Atome des Mediums ausgerichtet werden und deren Ausrichtung beim Leiten und/oder Umwandeln der Energie beibehalten wird.

2. Verfahren nach Anspruch 1 bei Anwendung auf festen Medien, insbesondere Metallen, dadurch gekennzeichnet, daß die Ausrichtung der Atome im flüssigen oder gasförmigen Zustand der Materie erfolgt und beim Abkühlen der Medien in den festen Zustand beibehalten wird.

3. Verfahren nach Anspruch 1 zur Erzeugung von Licht beim Durchfluß von elektrischem Strom durch das Medium, dadurch gekennzeichnet, daß in einem kurzen dünnen Bereich eines komprimierten und ionisierten Gases die Atome gerichtet werden.

4. Verfahren nach Anspruch 2 zur Erzeugung von Licht beim Durchfluß eines elektrischen Stroms durch einen Draht, dadurch gekennzeichnet, daß die Atome in einem kurzen, dünnen Draht gerichtet werden.

5. Verfahren nach Anspruch 4, dadurch gekennzeichnet, daß der Draht in einer Schutzkammer angeordnet ist.

6. Verfahren nach Anspruch 1 zur Durchführung einer Kernfusion, dadurch gekennzeichnet, daß zwei Plasmaströme mit gerichteten Atomen zur Kollision gebracht werden.

7. Verfahren nach Anspruch 1 zum Verändern von Materie durch Laserbeschuß, dadurch gekennzeichnet, daß die Atome der beschossenen Materie gerichtet sind.

8. Vorrichtung zur Durchführung des Verfahrens nach einem der Ansprüche 1 bis 7, gekennzeichnet durch Magneten, die in einem länglich erstreckten Bereich der Materie ein homogenes Magnetfeld erzeugen.

9. Vorrichtung nach Anspruch 8, dadurch gekennzeichnet, daß eine gasförmige Materie an einem geraden, länglichen Behälter angeordnet ist, daß der Behälter von ringabschnittförmigen Elektromagneten umgeben ist, die ein homogenes Magnetfeld in Längsrichtung des Behälters erzeugen und daß wenigstens zwei das Gas komprimierende Magnetspulen vorgesehen sind.

10. Vorrichtung nach Anspruch 8, gekennzeichnet durch eine ringförmige Anordnung eines Gasbehälters, an dessen Umfang ringabschnittförmige Elektromagneten angeordnet sind, in deren Mitte jeweils eine Spulenanordnung zur Kompression des Gases vorgesehen ist.

11. Stromleiter aus einem metallischen Material, dadurch gekennzeichnet, daß das metallische Material nach dem Verfahren nach Anspruch 1 oder 2 gerichtete Atome aufweist.

12. Glühdraht einer Glühbirne, dadurch gekennzeichnet, daß seine Atome nach dem Verfahren nach Anspruch 1 oder 2 gerichtet sind.

13. Gasentladungslampe, dadurch gekennzeichnet, daß das Gas nach dem Verfahren nach Anspruch 1 oder 3 gerichtete Atome aufweist.

14. Sende- und/oder Empfangsantenne, dadurch gekennzeichnet, daß das Antennenmaterial nach dem Verfahren nach Anspruch 1 oder 2 gerichtete Atome aufweist.

15. Transformerblech, dadurch gekennzeichnet, daß seine Atome nach dem Verfahren nach Anspruch 1 oder 2 gerichtet sind.

Fig. 1

Fig. 2

Fig. 3

Fig. 4

Fig 5

Fig. 6

Fig. 7

Fig. 8

Fig 9

Fig. 10

Fig. 11

Fig. 12

Fig. 13

Fig. 14

Fig. 15

Fig. 16

Fig. 17

Fig. 18.

Fig. 19

Fig. 20

Fig. 21

11/25

Fig. 22

Fig. 23

Fig. 24

Fig. 25

Fig. 26

0042571

Fig. 27.

Fig. 28

Fig. 29

Fig. 30

Fig. 31

Fig. 32

a)

b)

c)

17/25

Fig. 33

Fig. 34

18/25

Fig. 35

Fig. 36

0042571

Fig. 37

Fig. 38

Fig. 39

$Y_1$ → ← $Y_1$

$Y_2$

Fig. 40

Fig. 41

23/25

0042571

Fig. 42

Fig. 43

a)

b)

Fig. 44

Fig. 45

21

Fig. 46

22    23

Fig. 47

15    14

Fig. 48

**Europäisches Patentamt**

**EUROPÄISCHER RECHERCHENBERICHT**

**0042571**

Nummer der Anmeldung

EP 81 10 4614

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>AU - A - 475 585</u> (H.W. WALLACE) | 1 |
| | ✳ Seite 2, Zeilen 11-26; Seite 4, Zeile 17 - Seite 5, Zeile 16; Seite 6, Zeilen 2-10; Seiten 9-11; Seite 44, letzter Spalte; Seite 45 ✳ | |
| | --- | |
| | <u>DE - B - 1 068 825</u> (T. VOLOCHINE) | 1,6,8 |
| | ✳ Patentansprüche 1-5 ✳ | |
| | --- | |
| | NUCLEAR INSTRUMENTS AND METHODS, Band 125, Nr. 1, 15. März 1975, AMSTERDAM (NL) H. EBINGHAUS et al. "Search for a polarised lithium target", Seiten 73-78 | 1,2,8 |
| | ✳ Seite 73, Abschnitt 3.1; Figur 1 ✳ | |
| | --- | |
| | <u>KERNTECHNIK</u>, Band 16, Nr. 6, 1974, MÜNCHEN (DE) H. KUIPER "Polarisierte Targets- Polarised Targets", Seiten 252-259 | 1 |
| | ✳ Seite 252 ✳ | |
| | --- | |
| | <u>GB - A - 2 025 524</u> (BEESTON COMPANY) | 1,8 |
| | ✳ Seite 5, Zeilen 46-53; Patent- ansprüche 3, 21 und 22 ✳ | |
| | --- | |
| | ./. | |

**KLASSIFIKATION DER ANMELDUNG (Int. Cl.³)**

H 05 H   1/22
G 21 B   1/00
G 21 K   1/16
H 01 K   1/00
H 01 J  61/00
H 01 F  27/24
H 01 Q   3/44

**RECHERCHIERTE SACHGEBIETE (Int. Cl.³)**

H 05 H   1/22
         6/00
G 21 K   1/16
G 21 B   1/00
         1/07
H 01 F  27/24
H 01 Q   3/44

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

Der vorliegende Recherchenbericht wurde für alle Patentansprüche erstellt.

| Recherchenort Den Haag | Abschlußdatum der Recherche 25-09-1981 | Prüfer BORMS |
|---|---|---|

EPA form 1503.1   06.78

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US – A – 3 433 705 (C.D. CORNISH) <br><br> x Patentanspruch 1; Figuren 1,3,5-8 x | 8-10 |
| | JOURNAL OF APPLIED PHYSICS, Band 47, Nr. 2, Februar 1976 NEW YORK (US) A.A. OFFENBERGER et al. "$CO_2$-laser-produced plasma columns in a solenoidal magnetic field", Seiten 494-497 <br><br> x Seite 494; Figur 1 x | 7,8 |
| | US – A – 3 534 374 (R.E. JOHNSON) <br><br> x Spalte 3, Zeile 61 – Spalte 4, Zeile 27; Figuren 1-2 x | 14 |
| | IEEE TRANSACTIONS ON MAGNETICS, Band MAG-8, Nr. 3, September 1972, NEW YORK (US) T. SUZUKI et al. "The transformer characteristics of "Orientcore Hi-B" Seiten 321-323 <br><br> x Seite 321 x | 15 |
| A | GB – A – 1 282 391 (A.P. PEDRICK) <br><br> x Seiten 9-11 x | 1 |
| A | DE – A – 2 056 199 (GENSWEIN) <br><br> x Patentanspruch 1 x | 1,7,8 |

**KLASSIFIKATION DER ANMELDUNG (Int.Cl. ³)**

**RECHERCHIERTE SACHGEBIETE (Int. Cl. ³)**